# EUROPEAN PATENT APPLICATION

(11) **EP 4 498 682 A1**
(43) Date of publication of application: **29.01.2025**
(21) Application number: 22933792.8
(22) Date of filing: 22.03.2022
(51) Int. Cl.: H04N 21/431, H04N 21/485, H04N 21/43, H04N 21/436, H04N 21/422

(54) **DISPLAY DEVICE**

(71) Applicant: LG Electronics Inc., Yeongdeungpo-gu Seoul 07336 (KR)
(72) Inventor: YOO, Junwhan, Seoul 06772 (KR)
(74) Representative: Schornack, Oliver
(86) International application number: PCT/KR2022/095061
(87) International publication number: WO 2023/182624

(57) **Abstract**

According to an embodiment of the present invention, a display device can comprise a display; a user input interface configured to receive signals from a remote control device; and a controller configured to: play a first content image on a first layer of the display, when a trigger for adjusting a transparency of a second layer higher than the first layer is occurred, activate a function of adjusting the transparency of the second layer according to the trigger, receive an input signal for adjusting the transparency of the second layer from the remote control device, and adjust the transparency of the second layer playing a second content according to the input signal.

## Description

### [FIELD OF THE INVENTION]

The present disclosure relates to a display device, and more specifically, to a display device that can adjust the transparency of a display screen.

### [DISCUSSION OF THE RELATED ART]

Digital TV services using wired or wireless communication networks are becoming popular. Digital TV services can provide a variety of services that cannot be provided by existing analog broadcasting services.

For example, IPTV (Internet Protocol Television), a type of digital TV service, and smart TV service provide interactivity that allows users to actively select the type of program to watch and the viewing time. IPTV and smart TV services can provide various additional services, such as Internet search, home shopping, online games, and external device control, based on this interactivity.

In the past, viewing of a content video being played was interrupted during the process of executing and terminating an application or menu on a TV.

Accordingly, there was a problem in which it was impossible to view content video while displaying alarm information, IoT device status information, or channel information, which are functions of a specific application.

### [DISCLOSURE]

### [TECHNICAL PROBLEM]

The technical problem of the present disclosure is to provide a display device that prevents viewing of a content image being played regardless of execution of an application or menu.

The technical problem of this disclosure is to provide a seamless user experience between a display device and an application.

### [TECHNICAL SOLUTION]

According to an embodiment of the present invention, a display device can comprise a display; a user input interface configured to receive signals from a remote control device; and a controller configured to: play a first content image on a first layer of the display, when a trigger for adjusting a transparency of a second layer higher than the first layer is occurred, activate a function of adjusting the transparency of the second layer according to the trigger, receive an input signal for adjusting the transparency of the second layer from the remote control device, and adjust the transparency of the second layer playing a second content according to the input signal.

### [EFFECTS OF THE INVENTION]

According to an embodiment of the present disclosure, seamless switching between real-time broadcasting video and application execution video is possible through the wheel provided in the remote control device, so the user can check additional information about the alarm without interfering with viewing the real-time broadcasting video, thereby enjoying an improved user experience.

According to an embodiment of the present disclosure, a user can easily manipulate a content image played in a lower layer by adjusting transparency.

### [BRIEF DESCRIPTION OF THE DRAWINGS]

FIG. 1 is a block diagram illustrating a configuration of a display device according to an embodiment of the present disclosure.
FIG. 2 is a block diagram of a remote control device according to an embodiment of the present disclosure.
FIG. 3 shows an example of an actual configuration of a remote control device according to an embodiment of the present disclosure.
FIG. 4 shows an example of using a remote control device according to an embodiment of the present disclosure.
Figure 5 is a diagram for explaining the layer structure of a display according to an embodiment of the present disclosure.
Figure 6 is a diagram explaining the image output process of layers according to an embodiment of the present disclosure.
FIG. 7 is a diagram illustrating a method of controlling transparency of a display device according to an embodiment of the present disclosure.
FIG. 8 is a diagram illustrating an example of displaying a broadcast image on the first layer of a display according to an embodiment of the present disclosure.
FIG. 9 is a diagram illustrating an example of displaying an alarm pop-up window while playing a real-time broadcast video according to an embodiment of the present disclosure.
FIG. 10 is a diagram for explaining a method of adjusting transparency of a display according to an embodiment of the present disclosure.
FIGS. 11 to 13 are diagrams illustrating examples of viewing scenarios according to transparency adjustment of the second layer.
FIGS. 14 and 15 are diagrams illustrating an example of providing different menus depending on the properties (or type) of content played on the first layer when adjusting the transparency of the second layer.

### [BEST MODE]

Hereinafter, embodiments of the present disclosure will be described in detail with reference to the drawings. The suffixes "module" and "unit or portion" for components used in the following description are merely provided only for facilitation of preparing this specification, and thus they are not granted a specific meaning or function.

The display device according to an embodiment of the present disclosure is, for example, an intelligent display device in which a computer support function is added to a broadcast reception function, and is faithful to a broadcast reception function and has an Internet function added thereto, such as a handwritten input device, a touch screen. Alternatively, a more user-friendly interface such as a spatial remote control may be provided. In addition, it is connected to the Internet and a computer with the support of a wired or wireless Internet function, so that functions such as e-mail, web browsing, banking, or games can also be performed. A standardized general-purpose OS may be used for these various functions.

Accordingly, in the display device described in the present disclosure, various user-friendly functions can be performed because various applications can be freely added or deleted, for example, on a general-purpose OS kernel. More specifically, the display device may be, for example, a network TV, HBBTV, smart TV, LED TV, OLED TV, and the like, and may be applied to a smart phone in some cases.

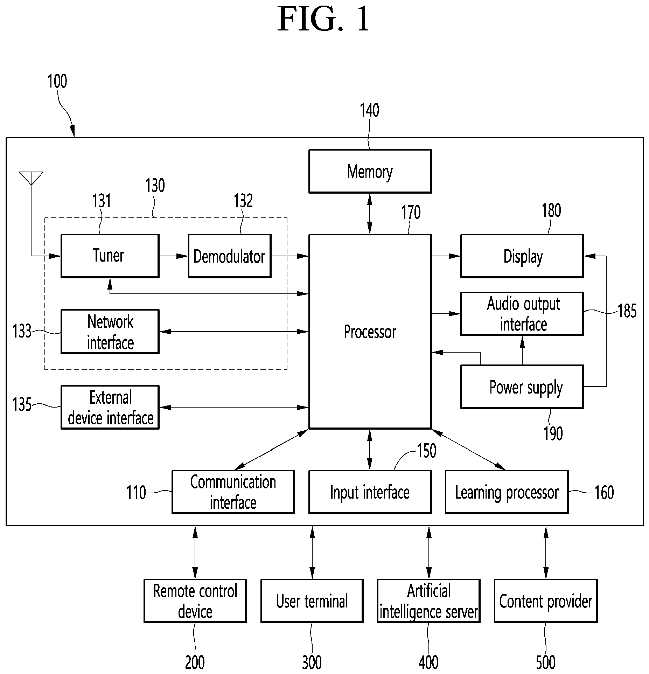

FIG. 1 is a block diagram showing a configuration of a display device according to an embodiment of the present disclosure.

Referring to FIG. 1, a display device 100 may include a broadcast receiver 130, an external device interface 135, a memory 140, a user input interface 150, a controller 170, a wireless communication interface 173, a display 180, a speaker 185, and a power supply circuit 190.

The broadcast receiver 130 may include a tuner 131, a demodulator 132, and a network interface 133.

The tuner 131 may select a specific broadcast channel according to a channel selection command. The tuner 131 may receive a broadcast signal for the selected specific broadcast channel.

The demodulator 132 may separate the received broadcast signal into an image signal, an audio signal, and a data signal related to a broadcast program, and restore the separated image signal, audio signal, and data signal to a format capable of being output.

The external device interface 135 may receive an application or a list of applications in an external device adjacent thereto, and transmit the same to the controller 170 or the memory 140.

The external device interface 135 may provide a connection path between the display device 100 and an external device. The external device interface 135 may receive one or more of images and audio output from an external device connected to the display device 100 in a wired or wireless manner, and transmit the same to the controller 170. The external device interface 135 may include a plurality of external input terminals. The plurality of external input terminals may include an RGB terminal, one or more High Definition Multimedia Interface (HDMI) terminals, and a component terminal.

The image signal of the external device input through the external device interface 135 may be output through the display 180. The audio signal of the external device input through the external device interface 135 may be output through the speaker 185.

The external device connectable to the external device interface 135 may be any one of a set-top box, a Blu-ray player, a DVD player, a game machine, a sound bar, a smartphone, a PC, a USB memory, and a home theater, but this is only an example.

The network interface 133 may provide an interface for connecting the display device 100 to a wired/wireless network including an Internet network. The network interface 133 may transmit or receive data to or from other users or other electronic devices through a connected network or another network linked to the connected network.

In addition, a part of content data stored in the display device 100 may be transmitted to a selected user among a selected user or a selected electronic device among other users or other electronic devices registered in advance in the display device 100.

The network interface 133 may access a predetermined web page through the connected network or the other network linked to the connected network. That is, it is possible to access a predetermined web page through a network, and transmit or receive data to or from a corresponding server.

In addition, the network interface 133 may receive content or data provided by a content provider or a network operator. That is, the network interface 133 may receive content such as movies, advertisements, games, VOD, and broadcast signals and information related thereto provided from a content provider or a network provider through a network.

In addition, the network interface 133 may receive update information and update files of firmware provided by the network operator, and may transmit data to an Internet or content provider or a network operator.

The network interface 133 may select and receive a desired application from among applications that are open to the public through a network.

The memory 140 may store programs for signal processing and control of the controller 170, and may store images, audio, or data signals, which have been subjected to signal-processed.

In addition, the memory 140 may perform a function for temporarily storing images, audio, or data signals input from an external device interface 135 or the network interface 133, and store information on a predetermined image through a channel storage function.

The memory 140 may store an application or a list of applications input from the external device interface 135 or the network interface 133.

The display device 100 may play back a content file (a moving image file, a still image file, a music file, a document file, an application file, or the like) stored in the memory 140 and provide the same to the user.

The user input interface 150 may transmit a signal input by the user to the controller 170 or a signal from the controller 170 to the user. For example, the user input interface 150 may receive and process a control signal such as power on/off, channel selection, screen settings, and the like from the remote control device 200 in accordance with various communication methods, such as a Bluetooth communication method, a WB (Ultra Wideband) communication method, a ZigBee communication method, an RF (Radio Frequency) communication method, or an infrared (IR) communication method or may perform processing to transmit the control signal from the controller 170 to the remote control device 200.

In addition, the user input interface 150 may transmit a control signal input from a local key (not shown) such as a power key, a channel key, a volume key, and a setting value to the controller 170.

The image signal image-processed by the controller 170 may be input to the display 180 and displayed as an image corresponding to a corresponding image signal. Also, the image signal image-processed by the controller 170 may be input to an external output device through the external device interface 135.

The audio signal processed by the controller 170 may be output to the speaker 185. Also, the audio signal processed by the controller 170 may be input to the external output device through the external device interface 135.

In addition, the controller 170 may control the overall operation of the display device 100.

In addition, the controller 170 may control the display device 100 by a user command input through the user input interface 150 or an internal program and connect to a network to download an application a list of applications or applications desired by the user to the display device 100.

The controller 170 may allow the channel information or the like selected by the user to be output through the display 180 or the speaker 185 along with the processed image or audio signal.

In addition, the controller 170 may output an image signal or an audio signal through the display 180 or the speaker 185, according to a command for playing back an image of an external device through the user input interface 150, the image signal or the audio signal being input from an external device, for example, a camera or a camcorder, through the external device interface 135.

Meanwhile, the controller 170 may allow the display 180 to display an image, for example, allow a broadcast image which is input through the tuner 131 or an external input image which is input through the external device interface 135, an image which is input through the network interface or an image which is stored in the memory 140 to be displayed on the display 180. In this case, an image being displayed on the display 180 may be a still image or a moving image, and may be a 2D image or a 3D image.

In addition, the controller 170 may allow content stored in the display device 100, received broadcast content, or external input content input from the outside to be played back, and the content may have various forms such as a broadcast image, an external input image, an audio file, still images, accessed web screens, and document files.

The wireless communication interface 173 may communicate with an external device through wired or wireless communication. The wireless communication interface 173 may perform short range communication with an external device. To this end, the wireless communication interface 173 may support short range communication using at least one of Bluetooth^{™}, Radio Frequency Identification (RFID), Infrared Data Association (IrDA), Ultra Wideband (UWB), ZigBee, Near Field Communication (NFC), Wi-Fi (Wireless-Fidelity), Wi-Fi(Wireless-Fidelity), Wi-Fi Direct, and Wireless USB (Wireless Universal Serial Bus) technologies. The wireless communication interface 173 may support wireless communication between the display device 100 and a wireless communication system, between the display device 100 and another display device 100, or between the display device 100 and a network in which the display device 100 (or an external server) is located through wireless area networks. The wireless area networks may be wireless personal area networks.

Here, the another display device 100 may be a wearable device (e.g., a smartwatch, smart glasses or a head mounted display (HMD), a mobile terminal such as a smart phone, which is able to exchange data (or interwork) with the display device 100 according to the present disclosure. The wireless communication interface 173 may detect (or recognize) a wearable device capable of communication around the display device 100.

Furthermore, when the detected wearable device is an authenticated device to communicate with the display device 100 according to the present disclosure, the controller 170 may transmit at least a portion of data processed by the display device 100 to the wearable device through the wireless communication interface 173. Therefore, a user of the wearable device may use data processed by the display device 100 through the wearable device.

The display 180 may convert image signals, data signals, and OSD signals processed by the controller 170, or image signals or data signals received from the external device interface 135 into R, G, and B signals, and generate drive signals.

Meanwhile, since the display device 100 shown in FIG. 1 is only an embodiment of the present disclosure, some of the illustrated components may be integrated, added, or omitted depending on the specification of the display device 100 that is actually implemented.

That is, two or more components may be combined into one component, or one component may be divided into two or more components as necessary. In addition, a function performed in each block is for describing an embodiment of the present disclosure, and its specific operation or device does not limit the scope of the present disclosure.

According to another embodiment of the present disclosure, unlike the display device 100 shown in FIG. 1, the display device 100 may receive an image through the network interface 133 or the external device interface 135 without a tuner 131 and a demodulator 132 and play back the same.

For example, the display device 100 may be divided into an image processing device, such as a set-top box, for receiving broadcast signals or content according to various network services, and a content playback device that plays back content input from the image processing device.

In this case, an operation method of the display device according to an embodiment of the present disclosure will be described below may be implemented by not only the display device 100 as described with reference to FIG. 1 and but also one of an image processing device such as the separated set-top box and a content playback device including the display 180 and the speaker 185.

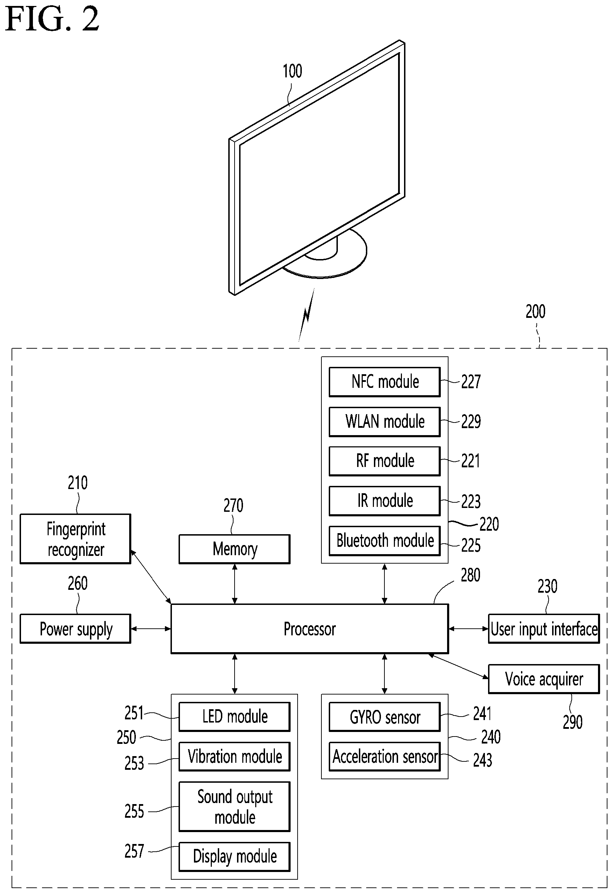

Next, a remote control device according to an embodiment of the present disclosure will be described with reference to FIGS. 2 to 3.

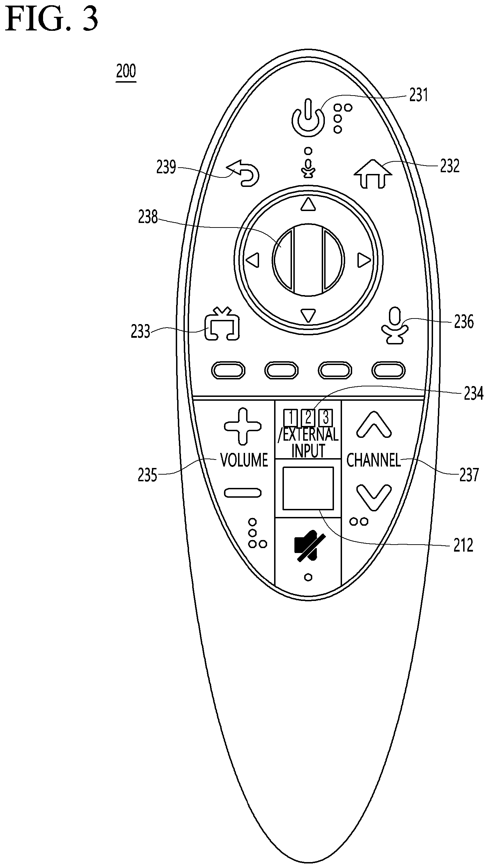

FIG. 2 is a block diagram of a remote control device according to an embodiment of the present disclosure, and FIG. 3 shows an actual configuration example of a remote control device 200 according to an embodiment of the present disclosure.

First, referring to FIG. 2, the remote control device 200 may include a fingerprint reader 210, a wireless communication circuit 220, a user input interface 230, a sensor 240, an output interface 250, a power supply circuit 260, a memory 270, a controller 280, and a microphone 290.

Referring to FIG. 2, the wireless communication circuit 220 may transmit and receive signals to and from any one of display devices according to embodiments of the present disclosure described above.

The remote control device 200 may include an RF circuit 221 capable of transmitting and receiving signals to and from the display device 100 according to the RF communication standard, and an IR circuit 223 capable of transmitting and receiving signals to and from the display device 100 according to the IR communication standard. In addition, the remote control device 200 may include a Bluetooth circuit 225 capable of transmitting and receiving signals to and from the display device 100 according to the Bluetooth communication standard. In addition, the remote control device 200 may include an NFC circuit 227 capable of transmitting and receiving signals to and from the display device 100 according to the NFC (near field communication) communication standard, and a WLAN circuit 229 capable of transmitting and receiving signals to and from the display device 100 according to the wireless LAN (WLAN) communication standard.

In addition, the remote control device 200 may transmit a signal containing information on the movement of the remote control device 200 to the display device 100 through the wireless communication circuit 220.

In addition, the remote control device 200 may receive a signal transmitted by the display device 100 through the RF circuit 221, and transmit a command regarding power on/off, channel change, volume adjustment, or the like to the display device 100 through the IR circuit 223 as necessary.

The user input interface 230 may include a keypad, a button, a touch pad, a touch screen, or the like. The user may input a command related to the display device 100 to the remote control device 200 by operating the user input interface 230. When the user input interface 230 includes a hard key button, the user may input a command related to the display device 100 to the remote control device 200 through a push operation of the hard key button. Details will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back-play button 239.

The fingerprint recognition button 212 may be a button for recognizing a user's fingerprint. In one embodiment, the fingerprint recognition button 212 may enable a push operation, and thus may receive a push operation and a fingerprint recognition operation.

The power button 231 may be a button for turning on/off the power of the display device 100.

The home button 232 may be a button for moving to the home screen of the display device 100.

The live button 233 may be a button for displaying a real-time broadcast program.

The external input button 234 may be a button for receiving an external input connected to the display device 100.

The volume control button 235 may be a button for adjusting the level of the volume output by the display device 100.

The voice recognition button 236 may be a button for receiving a user's voice and recognizing the received voice.

The channel change button 237 may be a button for receiving a broadcast signal of a specific broadcast channel.

The OK button 238 may be a button for selecting a specific function, and the back-play button 239 may be a button for returning to a previous screen.

A description will be given referring again to FIG. 2.

When the user input interface 230 includes a touch screen, the user may input a command related to the display device 100 to the remote control device 200 by touching a soft key of the touch screen. In addition, the user input interface 230 may include various types of input means that may be operated by a user, such as a scroll key or a jog key, and the present embodiment does not limit the scope of the present disclosure.

The sensor 240 may include a gyro sensor 241 or an acceleration sensor 243, and the gyro sensor 241 may sense information regarding the movement of the remote control device 200.

For example, the gyro sensor 241 may sense information about the operation of the remote control device 200 based on the x, y, and z axes, and the acceleration sensor 243 may sense information about the moving speed of the remote control device 200. Meanwhile, the remote control device 200 may further include a distance measuring sensor to sense the distance between the display device 100 and the display 180.

The output interface 250 may output an image or audio signal corresponding to the operation of the user input interface 230 or a signal transmitted from the display device 100.

The user may recognize whether the user input interface 230 is operated or whether the display device 100 is controlled through the output interface 250.

For example, the output interface 450 may include an LED 251 that emits light, a vibrator 253 that generates vibration, a speaker 255 that outputs sound, or a display 257 that outputs an image when the user input interface 230 is operated or a signal is transmitted and received to and from the display device 100 through the wireless communication circuit 220.

In addition, the power supply circuit 260 may supply power to the remote control device 200, and stop power supply when the remote control device 200 has not moved for a predetermined time to reduce power consumption.

The power supply circuit 260 may restart power supply when a predetermined key provided in the remote control device 200 is operated.

The memory 270 may store various types of programs and application data required for control or operation of the remote control device 200.

When the remote control device 200 transmits and receives signals wirelessly through the display device 100 and the RF circuit 221, the remote control device 200 and the display device 100 transmit and receive signals through a predetermined frequency band.

The controller 280 of the remote control device 200 may store and refer to information on a frequency band capable of wirelessly transmitting and receiving signals to and from the display device 100 paired with the remote control device 200 in the memory 270.

The controller 280 may control all matters related to the control of the remote control device 200. The controller 280 may transmit a signal corresponding to a predetermined key operation of the user input interface 230 or a signal corresponding to the movement of the remote control device 200 sensed by the sensor 240 through the wireless communication circuit 220.

Also, the microphone 290 of the remote control device 200 may obtain a speech.

A plurality of microphones 290 may be provided.

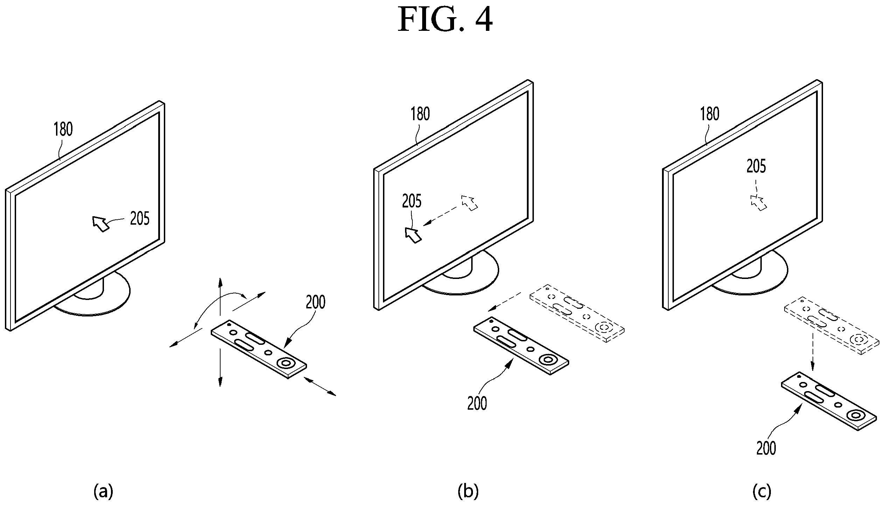

Next, a description will be given referring to FIG. 4.

FIG. 4 shows an example of using a remote control device according to an embodiment of the present disclosure.

In FIG. 4, (a) illustrates that a pointer 205 corresponding to the remote control device 200 is displayed on the display 180.

The user may move or rotate the remote control device 200 up, down, left and right. The pointer 205 displayed on the display 180 of the display device 100 may correspond to the movement of the remote control device 200. As shown in the drawings, the pointer 205 is moved and displayed according to movement of the remote control device 200 in a 3D space, so the remote control device 200 may be called a space remote control device.

In (b) of FIG. 4, it is illustrated that that when the user moves the remote control device 200 to the left, the pointer 205 displayed on the display 180 of the display device 100 moves to the left correspondingly.

Information on the movement of the remote control device 200 detected through a sensor of the remote control device 200 is transmitted to the display device 100. The display device 100 may calculate the coordinates of the pointer 205 based on information on the movement of the remote control device 200. The display device 100 may display the pointer 205 to correspond to the calculated coordinates.

In (c) of FIG. 4, it is illustrated that a user moves the remote control device 200 away from the display 180 while pressing a specific button in the remote control device 200. Accordingly, a selected area in the display 180 corresponding to the pointer 205 may be zoomed in and displayed enlarged.

Conversely, when the user moves the remote control device 200 to be close to the display 180, the selected area in the display 180 corresponding to the pointer 205 may be zoomed out and displayed reduced.

On the other hand, when the remote control device 200 moves away from the display 180, the selected area may be zoomed out, and when the remote control device 200 moves to be close to the display 180, the selected area may be zoomed in.

Also, in a state in which a specific button in the remote control device 200 is being pressed, recognition of up, down, left, or right movements may be excluded. That is, when the remote control device 200 moves away from or close to the display 180, the up, down, left, or right movements are not recognized, and only the forward and backward movements may be recognized. In a state in which a specific button in the remote control device 200 is not being pressed, only the pointer 205 moves according to the up, down, left, or right movements of the remote control device 200.

Meanwhile, the movement speed or the movement direction of the pointer 205 may correspond to the movement speed or the movement direction of the remote control device 200.

Meanwhile, in the present specification, a pointer refers to an object displayed on the display 180 in response to an operation of the remote control device 200. Accordingly, objects of various shapes other than the arrow shape shown in the drawings are possible as the pointer 205. For example, the object may be a concept including a dot, a cursor, a prompt, a thick outline, and the like. In addition, the pointer 205 may be displayed corresponding to any one point among points on a horizontal axis and a vertical axis on the display 180, and may also be displayed corresponding to a plurality of points such as a line and a surface.

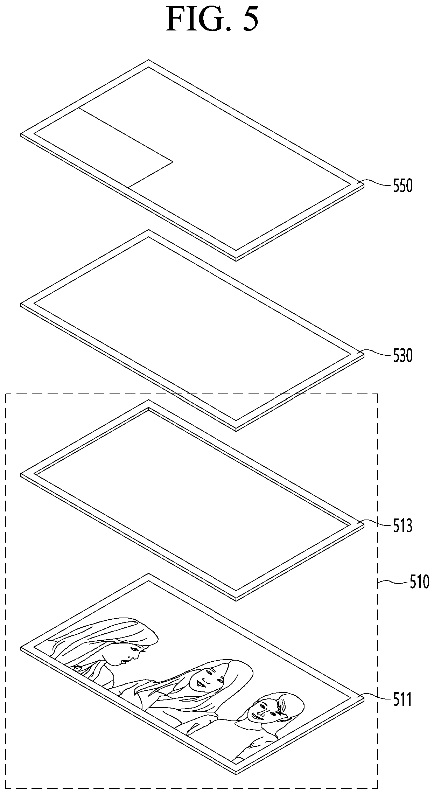

Figure 5 is a diagram for explaining a layer structure of a display according to an embodiment of the present disclosure.

Referring to FIG. 5, the layers of the display 180 may include a card layer 510, an overlay layer 530, and a pop-up layer 550.

The card layer 510 may include a first layer 511 and a second layer 513.

The first layer 511 may be a layer for playing live broadcast video.

The second layer 513 is a Peek layer and may be a layer for playing an execution video of an application.

As another example, the first layer 511 may be a layer for executing a first application, and the second layer 513 may be a layer for executing a second application.

The overlay layer (or a third layer, 530) may be a layer for providing a menu for setting the display device 100 or the display 180 or a menu for controlling an application.

The pop-up layer (a fourth layer, 550) may be a layer for playing a pop-up window.

The fourth layer 550 is the highest layer, and the third layer 530, second layer 513, and first layer 511 may follow in that order. That is, the first layer 511 may be the lowest layer.

In one embodiment, the transparency of only the second layer 513 among the first to fourth layers 511, 513, 530, and 550 can be adjusted. However, this is just an example, and the transparency of other layers may also be adjusted.

Hereinafter, the description will be made assuming that only the second layer 513 can have transparency adjusted.

As the transparency of the second layer 513 is adjusted, the transparency of the content image displayed on the second layer 513 may be adjusted.

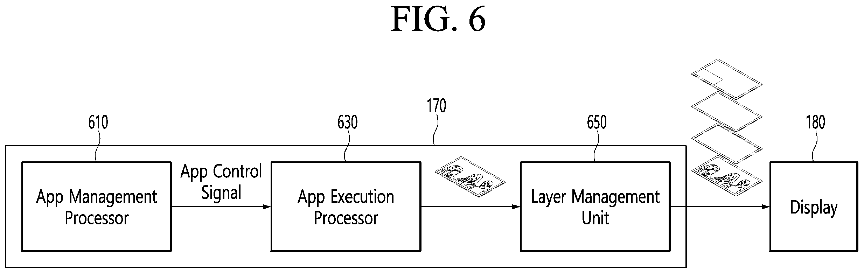

Figure 6 is a diagram explaining an image output process of layers according to an embodiment of the present disclosure.

Referring to FIG. 6, the controller 170 may include an app management processor 610, an app execution processor 630, and a layer manager 650.

When receiving an alarm of an application, the app management processor 610 may generate an app control signal to display the alarm of the application, and transmit the generated app control signal to the app execution processor 630.

The app execution processor 630 may execute the application according to the received app control signal and transmit a playback command to the layer manager 650 to play the execution image of the application on the second layer 513.

The layer manager 650 may transmit images to be output on each layer to the display 180 according to a playback control command including a playback command received from the app execution processor 630.

The layer manager 650 may adjust the transparency of the second layer 513 or the transparency of the image played on the second layer 513 according to the input signal for transparency adjustment.

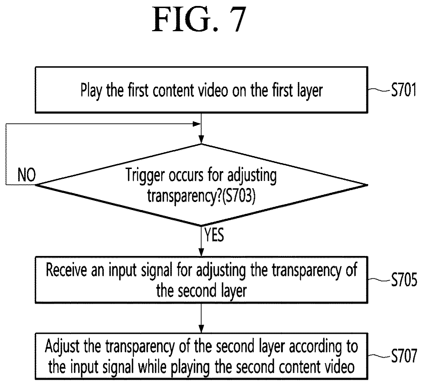

FIG. 7 is a diagram illustrating a method of controlling transparency of a display device according to an embodiment of the present disclosure.

Referring to FIG. 7, the controller 170 of the display device 100 may display the first content image on the first layer 511 of the display 180 (S701).

In one embodiment, the first content image may be a broadcast image. Specifically, the first content image may be a real-time broadcast image.

The first content image may be a broadcast image provided through a live TV application for providing real-time broadcasting.

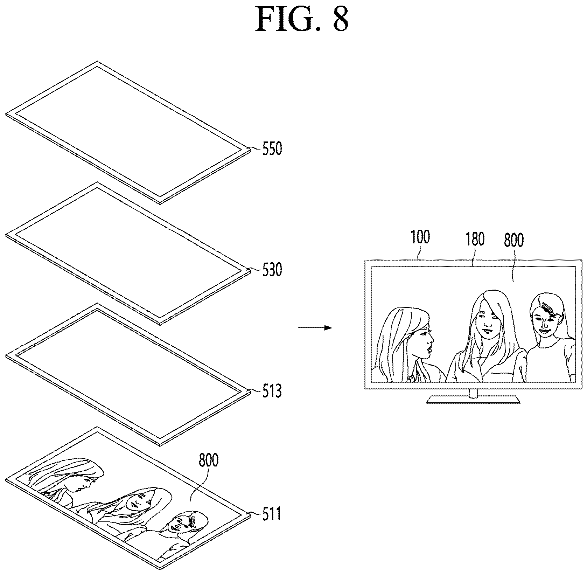

FIG. 8 is a diagram illustrating an example of displaying a broadcast image on the first layer of a display according to an embodiment of the present disclosure.

Referring to FIG. 8, a real-time broadcast image 800 is displayed on the first layer 511 of the display 180.

When receiving the real-time broadcast image 800, the controller 170 may control the display 180 so that the real-time broadcast image 800 is output on the first layer 511.

That is, there may be a situation in which no image is played on the second layer 513, third layer 530, and fourth layer 550.

A viewer is watching a broadcast video 800 through the display 180 of the display device 100.

Again, Figure 7 will be described.

The controller 170 may determine whether a trigger for adjusting the transparency of the second layer 513 has occurred (703) .

In one embodiment, when an alarm is received while playing the first content image, the controller 170 may determine that a trigger for adjusting the transparency of the second layer 513 has occurred.

Here, the alarm may be any one of a sports game progress (or result) alarm, a schedule alarm, or an alarm received from an IoT device linked to the display device 100.

In another embodiment, when an alarm pop-up window corresponding to an alarm is displayed on the fourth layer 550, the controller 170 may determine that a trigger for adjusting the transparency of the second layer 513 has occurred.

In another embodiment, when receiving an image for screen sharing from an external device, the controller 170 may determine that a trigger for adjusting the transparency of the second layer 513 has occurred.

The controller 170 may receive an image for screen sharing from an external device through the wireless communication interface 173 and output it on the second layer 513. The controller 170 may determine that a trigger for adjusting the transparency of the second layer 513 has occurred at the time of outputting an image for screen sharing on the second layer 513.

When a trigger for adjusting the transparency of the second layer 513 occurs, the controller 170 may output a notification indicating the occurrence of the trigger through the display 180 or speaker 185.

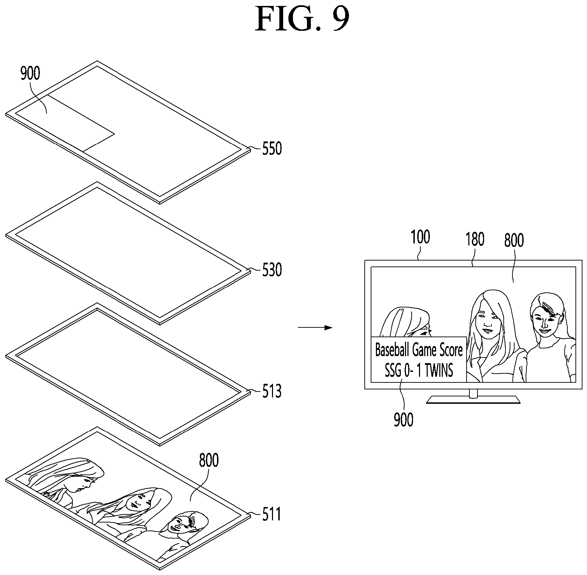

Figure 9 is a diagram illustrating an example of displaying an alarm pop-up window while playing a real-time broadcast video according to an embodiment of the present disclosure.

Referring to FIG. 9, a real-time broadcast video 800 is being played on the first layer 511.

If an alarm occurs while playing the real-time broadcast video 800, the controller 170 may display a pop-up window 900 corresponding to the alarm on the fourth layer 550.

From a viewer's perspective, the pop-up window 900 may appear to be displayed overlapping the real-time broadcast video 800.

When an alarm is generated or a pop-up window 900 is displayed on the fourth layer 550, the controller 170 may determine that a trigger for adjusting the transparency of the second layer 513 has occurred.

Again, Figure 7 will be described.

When a trigger for adjusting the transparency of the second layer 513 occurs, the controller 170 receives an input signal for adjusting the transparency of the second layer 513 (705).

In one embodiment, the controller 170 may receive an input signal for adjusting the transparency of the second layer 513 from the remote control device 200 through the user input interface 150.

The input signal for transparency control may be either an IR signal or a Bluetooth signal.

In another embodiment, the controller 170 may receive an input signal for transparency adjustment in the form of voice through a microphone (not shown) provided in the display device 100.

The input signal for transparency adjustment may be a signal for adjusting the transparency of the second layer 513 to any one of 0% through 100% transparency.

The user can adjust the transparency of the second layer 513 using the button or wheel provided on the remote control device 200.

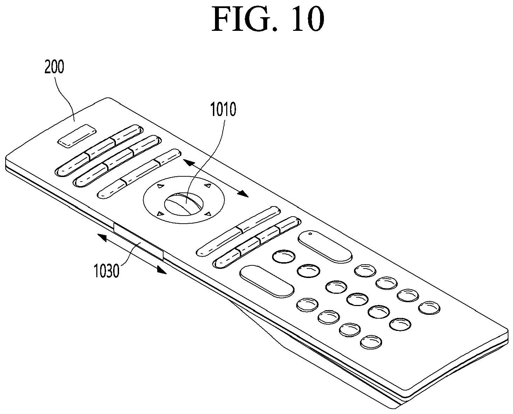

This will be explained with reference to FIG. 10.

Figure 10 is a diagram for illustrating a method of adjusting transparency of a display according to an embodiment of the present disclosure.

Referring to FIG. 10, the remote control device 200 may include one or more of a first wheel 1010 and a second wheel 1030.

The first wheel 1010 or the second wheel 1030 may be a physical component for adjusting the transparency of the second layer 513.

The user can adjust the transparency of the second layer 513 by manipulating either the first wheel 1010 or the second wheel 1030.

The user can adjust the transparency of the second layer 513 by raising or lowering either the first wheel 1010 or the second wheel 1030.

In one embodiment, transparency may increase as the wheel is raised, and transparency may decrease as the wheel is lowered. However, there is no need to be limited to this, and transparency may decrease as the wheel is raised, and transparency may increase as the wheel is lowered.

The transparency of the second layer 513 can have a value from 0 to 100, and the user can control the display 180 to have any transparency from 0 to 100 through a wheel operation.

Again, Figure 7 will be described.

The controller 170 may adjust the transparency of the second layer 513 that plays the second content image according to the received input signal (707).

The display device 100 may receive an input signal according to the wheel operation from the remote control device 200 and adjust the transparency of the second layer 513 according to the received input signal.

Depending on the transparency of the second layer 513, only the first content image on the first layer 511 is displayed on the display 180, or only the second content image on the second layer 513 is displayed on the display 180. Alternatively, the first and second content images may be displayed overlapping each other.

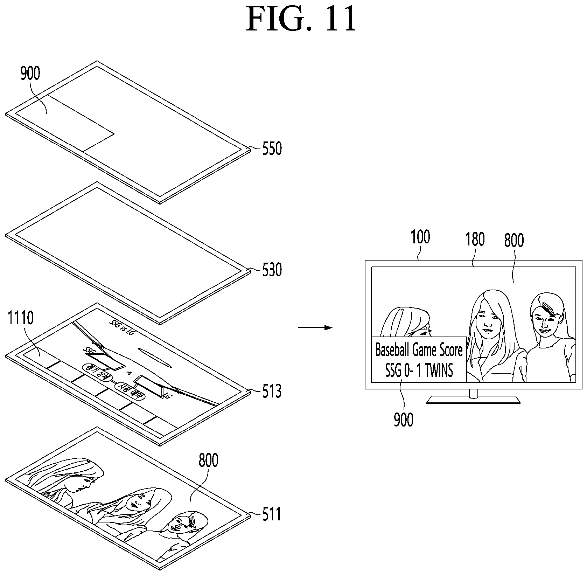

FIGS. 11 to 13 are diagrams illustrating examples of viewing scenarios according to transparency adjustment of the second layer.

Referring to FIG. 11, a real-time broadcast video 800 is being played on the first layer 511 constituting the display 180, an execution image 1110 of an application is being played on the second layer 513, and the second layer 513 is playing a real-time broadcast video 800. A pop-up window 900 is playing on the fourth layer 900.

As another example, the controller 170 may display the application execution image 1110 on the second layer 513 as the pop-up window 900 is displayed on the fourth layer 550.

The pop-up window 900 may be a window indicating a score alarm of a sports game.

When receiving an alarm, the controller 170 may recognize the received alarm as a trigger that can adjust the transparency of the second layer 513.

When receiving an alarm, the controller 170 may activate the transparency adjustment function of the second layer 513. In another embodiment, the controller 170 may activate the transparency adjustment function of the second layer 513 when receiving a mirrored image for screen sharing (screen mirroring) from an external device. The mirroring image may be displayed on the second layer 513.

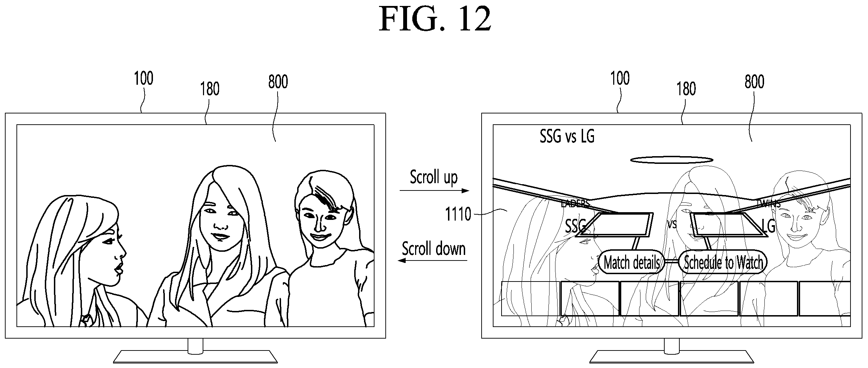

Referring to FIG. 12, when the display device 100 receives a scroll up signal to increase the wheel from the remote control device 200, the display device 100 may decrease the transparency of the second layer 513. Accordingly, the execution image 1110 of the application may be displayed overlapping with the real-time broadcast image 800.

When the controller 170 receives a scroll up signal that adjusts transparency to 0, it can enter the application running on the second layer 513.

When the controller 170 receives a scroll down signal from the remote control device 200 to lower the wheel, the controller 170 may increase the transparency of the second layer 513.

When the controller 170 receives a scroll up or down command to adjust the transparency to 100, the display 180 may display only the broadcast image 800 being played on the first layer 511.

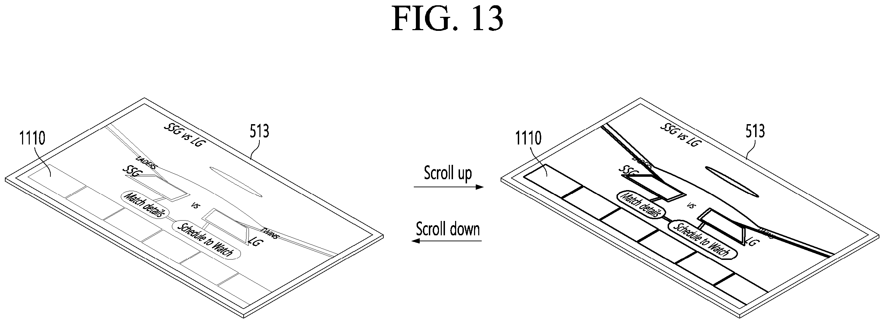

That is, as shown in FIG. 13, the display device 100 can adjust the transparency of the application execution image 1110 being played on the second layer 513 according to a scroll up command or a scroll down command.

As such, according to the embodiment of the present disclosure, seamless switching between the real-time broadcast image 800 and the application execution image 1110 is possible through the wheel provided in the remote control device 200.

Accordingly, users can enjoy an improved user experience by being able to check additional information about the alarm without interfering with watching the real-time broadcast video.

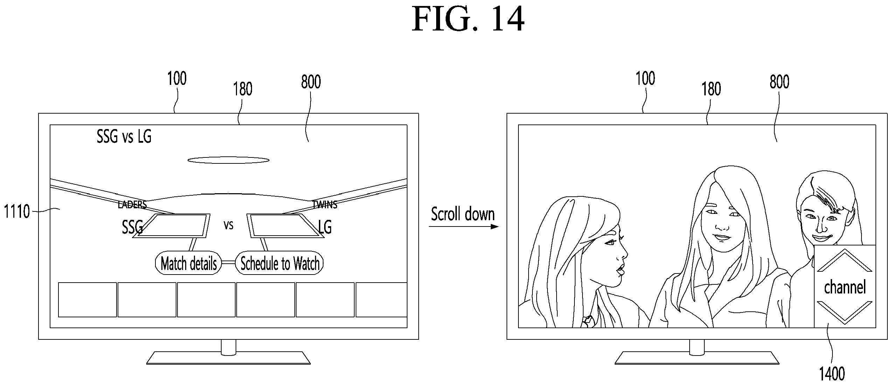

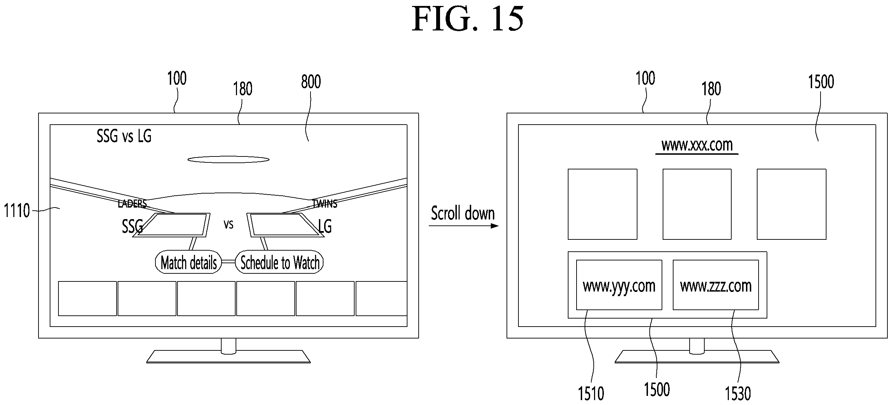

FIGS. 14 and 15 are diagrams illustrating an example of providing different menus depending on the properties (or type) of content played on the first layer when adjusting the transparency of the second layer.

Referring to FIGS. 14 and 15, the display device 100 displays an execution image 1110 of an application being played on the second layer 513. It is assumed that the transparency of the second layer 513 is 0.

The display device 100 may increase the transparency of the second layer 513 as it receives a scroll down command from the remote control device 200. As the transparency of the second layer 513 increases, the display device 100 may expose the real-time broadcast image 800 being played on the first layer 511.

As the transparency of the second layer 513 increases, the display device 100 may display a menu for controlling content being played on the first layer 511. A menu for controlling content may be displayed on the third layer 530 or the first layer 511.

As the transparency of the second layer 513 increases, the display device 100 may display a channel manipulation menu 1400 for controlling the real-time broadcast image being played on the first layer 511.

The channel manipulation menu 1400 may be displayed when the transparency of the second layer 513 increases or when the transparency becomes 100.

As another example, the channel manipulation menu 1400 may be displayed when the transparency of the second layer 513 is above a certain value.

Next, Figure 15 will be described.

FIG. 15 assumes that an application execution image 1110 is being played on the second layer 513 and a web page image 1500 is being played on the first layer 511.

The display device 100 may increase the transparency of the second layer 513 as it receives a scroll down command from the remote control device 200. The display device 100 may expose the web 800 being played on the first layer 511 as the transparency of the second layer 513 increases.

As the transparency of the second layer 513 increases, the display device 100 may display a menu related to the web page image 1500 being played on the first layer 511. A menu related to the web page image 1500 may be displayed on the third layer 530 or the first layer 511.

As the transparency of the second layer 513 increases, the display device 100 displays thumbnails 1510 and 1530 representing each of the web pages accessed before the web page 1500 being played on the first layer 511. The included web page menu 1500 can be displayed.

As another example, as the transparency of the second layer 513 increases, the display device 100 may displays a favorites menu containing items indicating each of the web pages registered as favorites other than the web page 1500 being played on the first layer 511.

The web page menu 1500 may be displayed when the transparency of the second layer 513 increases or when the transparency becomes 100.

As another example, the web page menu 1500 may be displayed when the transparency of the second layer 513 is above a certain value.

As such, according to the embodiment of FIGS. 14 and 15, a menu for controlling the content or application being played on the first layer 511 may be displayed according to the transparency adjustment of the second layer 513.

Accordingly, the user can easily control the content being played on the first layer 511, which is a lower layer, while watching the content image being played on the second layer 513.

According to an embodiment of the present invention, the above-described method can be implemented as processor-readable code on a program-recorded medium. Examples of media that the processor can read include ROM, RAM, CD-ROM, magnetic tape, floppy disk, and optical data storage devices.

The display device described above is not limited to the configuration and method of the above-described embodiments, and the embodiments may be configured by selectively combining all or part of each embodiment so that various modifications can be made.

## Claims

1. A display device comprising:
a display;
a user input interface configured to receive signals from a remote control device; and
a controller configured to:
play a first content image on a first layer of the display, when a trigger for adjusting a transparency of a second layer higher than the first layer is occurred, activate a function of adjusting the transparency of the second layer according to the trigger, receive an input signal for adjusting the transparency of the second layer from the remote control device, and adjust the transparency of the second layer playing a second content according to the input signal.

2. The display device of claim 1, wherein the controller is configured to determine that the trigger for adjusting the transparency has occurred when an alarm related to the second content image is received.

3. The display device of claim 1, wherein the second content image is a mirroring image for screen sharing received from an external device, and
wherein the controller is configured to determine that the trigger for adjusting the transparency has occurred when the mirroring image is received.

4. The display device of claim 1, wherein the controller is configured to obtain a scroll up signal corresponding to a scroll up of a wheel provided in the remote control device or a scroll down signal corresponding to a scroll down of the wheel as the input signal for adjusting the transparency.

5. The display device of claim 4, wherein the controller is configured to:
when receiving the scroll up signal, decrease the transparency of the second layer, and
when receiving the scroll down signal, increase the transparency of the second layer.

6. The display device of claim 1, wherein the controller is configured to determine that the trigger has occurred when an alarm pop-up window related to the second content image is displayed.

7. The display device of claim 1, wherein the controller is configured to display a menu corresponding to a type of the first content image when the input signal that increases transparency of the second layer is received.

8. The display device of claim 7, wherein the menu is a menu for manipulating a channel when the first content image is a real-time broadcast image.

9. The display device of claim 7, wherein the menu includes thumbnail images of previously accessed web pages or web pages registered as favorites when the first content image is a web page image.

10. The display device of claim 1, wherein the controller is configured to display only the first content image on the display when the input signal that maximizes the transparency of the second layer is received.

11. A method of operating a display device, comprising:
playing a first content image on a first layer of a display;
when a trigger for adjusting a transparency of a second layer higher than the first layer is occurred, activating a transparency adjustment function of the second layer according to the generated trigger;
receiving an input signal for adjusting transparency of the second layer from a remote control device; and
adjusting the transparency of the second layer playing the second content image according to the received input signal.

12. The method of claim 11, further comprising determining that the trigger for adjusting the transparency has occurred when an alarm related to the second content image is received.

13. The method of claim 11, wherein the second content image is a mirroring image for screen sharing received from an external device, and
wherein the method further comprises, when the mirroring image is received, determining that the trigger for adjusting the transparency has occurred.

14. The method of claim 11, wherein the step of receiving the input signal comprises obtaining a scroll up signal corresponding to a scroll up of a wheel provided in the remote control device or a scroll down signal corresponding to a scroll down of the wheel as an input signal for adjusting the transparency.

15. The method of claim 14, wherein the step of adjusting comprises:
when receiving the scroll up signal, reducing the transparency of the second layer, and
when receiving the scroll down signal, increasing the transparency of the second layer.
